(19) **Europäisches Patentamt**

**European Patent Office**

**Office européen des brevets**

(11) Veröffentlichungsnummer: **0 252 313**

**A1**

(12) # EUROPÄISCHE PATENTANMELDUNG

(21) Anmeldenummer: **87108246.7**

(51) Int. Cl.⁴: **F16G 11/12**

(22) Anmeldetag: **06.06.87**

(30) Priorität: **07.06.86 DE 3619263**
**12.12.86 DE 3642449**
**19.03.87 DE 3708936**

(43) Veröffentlichungstag der Anmeldung:
**13.01.88 Patentblatt 88/02**

(84) Benannte Vertragsstaaten:
**ES GR**

(71) Anmelder: **Kreiss, Burkhard, Prof.**
**Heinrich-Berns-Strasse 14**
**D-4300 Essen 18(DE)**

(72) Erfinder: **Kreiss, Burkhard, Prof.**
**Heinrich-Berns-Strasse 14**
**D-4300 Essen 18(DE)**

(74) Vertreter: **Schumacher, Horst, Dr. Dipl.-Phys.**
**Frühlingstrasse 43 (Ecke Holunderweg)**
**D-4300 Essen 1(DE)**

(54) **Seilzuggerät.**

(57) Bei einem Seilzuggerät zum Ziehen und Halten sowie möglichst auch zum Wiederloslassen eines Seiles (5) oder ähnlichen Zugbandes (200) unter Last wird eine Verbesserung der Handhabung, insbesondere ein Betätigungsmöglichkeit mit einer einzigen Hand dadurch erreicht, daß mindestens eine antreibbare Rolle (7) mit ihrer Umfangsfläche (500) auf das Zugband (200) im Zug-und Haltesinne wirkt, wobei das Zugband (200) mindestens im Zug-und Haltebetrieb an der antreibbaren Rolle (7) mittels eines Führungselementes (300) in Anlage gehalten wird. Auf die antreibbare Rolle (7) wirkt zumindest im Zug-und Haltesinne eine Antriebseinrichtung (400). Ein mit einem das Seilzuggerät (100) aufnehmenden Gehäuse (21) ortsfest verbundenes erstes Griffelement (600) dient zum Festhalten für bevorzugt eine einzige Hand der Bedienperson. Ein zweites Griffelement (700) ermöglicht eine absatzweise wiederholte Betätigung der Antriebseinrichtung (400) im Zugbetrieb mit der einen einzigen Hand der Bedienperson, wobei das erste und das zweite Griffelement (66 und 700) derart einander zugeordnet sind, daß sie von der einzigen Hand der Bedienperson stets gemeinsam greif-und betätigbar sind.

Fig. 1a

## Seilzuggerät

Die Erfindung betrifft ein Seilzuggerät zumindest zum Ziehen und Halten eines Seiles oder ähnlichen Zugbandes unter Last.

Derartige Seilzuggeräte dienen z. B. zum Dichtholen, Belegen, Lösen, aber auch zum Bremsen des sogenannten laufenden Gutes, wie Schoten und anderen Leinen z. B. auf Segelboten, wie Jollen, Jachten und Segelsurfern.

Derartige Seilzuggeräte sind z. B. in Form von Flaschenzügen und Trommelwinden bekannt. Sie erfordern jedoch eine besondere Sorgfalt bei der Bedienung, weil sonst das Seil verheddert oder sich verklemmt oder abspringt.

Davon ausgehend liegt der Erfindung die Aufgabe zugrunde, ein einfach zu handhabendes Seilzuggerät der eingangs genannten Art zu schaffen.

Zur Lösung dieser Aufgabe wird ein Seilzuggrät vorgeschlagen, das durch folgende Merkmale gekennzeichnet ist:

a) mindestens eine mit ihrer Umfangsfläche auf das Zugband im zug-und Haltesinne wirkende antreibbare Rolle,

b) ein das Zugband zumindest im Zug-und Haltebetrieb an der antreibbaren Rolle in Anlage haltendes Führungselement,

c) eine auf die antreibbare Rolle zumindest im Zug-und Haltesinne wirkende Antriebseinrichtung,

d) ein das Seilzuggerät aufnehmendes Gehäuse,

e) ein mit dem Gehäuse ortsfest vrebundenes erstes Griffelement für zumindest eine Hand einer Bedienperson sowie

f) ein zweites Griffelement zum absatzweise wiederholten Betätigen der Antriebseinrichtung im Zugbetrieb mit der zumindest einen Hand der Bedienperson,

wobei das erste und zweite Griffelement derart einander zugeordnet sind,daß sie von einer einzigen Hand der Bedienperson stets gemeinsam greif-und betätigbar sind.

Unter "Zugbändern" sind im Sinne der Erfindung alle länglichen, quer zu ihrere Längsrichtung mehr oder minder flexiblen zugfesten Elemente zu verstehen, wie Seile aus geflochtenen, geschlagenen oder einfach in Längsrichtung angeordneten gebündelten Fasern aus beliebigem Material, wie Glas, Kunststoffen, Naturfasern, Metallen, Kohlenstoff oder dergleichen aber auch stabförmige Elemente. Die Querschnitte der Zugbänder können kreisrund, oval, vieleckig, flach und breit, insbesondere rechteckig, hohl oder nicht hohl und ähnlich sein. Die äußeren Oberflächen der Zugbänder können - je nach Anwendungsfall - relativ rauh, aber auch glatt sein; lediglich muß beim Zusammenwirken der antreibbaren Rolle und des Zugbandes eine Kraft und Bewegung im Zugsinne von der Rolle auf das Zugband übertragbar sein. Dieser Kontakt kann kraftschlüssiger aber auch formschlüssiger Natur sein. Die vorerwähnten Möglichkeiten des Aufbaus und der Gestaltung des Zugbandes und des Zusammenwirkens mit der antreibbaren Rolle können im weitesten Rahmen auch miteinander kombiniert werden.

Das erfindungsgemäße "Führungselement", welches das Zugband zumindest im Zug-und Haltebetrieb an der antreibbaren Rolle in Anlage hält, hat die Aufgabe, die Aufrechterhaltung des kraft-bzw. formschlüssigen Kontaktes zwischen dem Zugband und der antreibbaren Rolle sicherzustellen; es besteht bei einer praktischen Ausführungsform der Erfindung aus einer weiteren Rolle, die, vorzugsweise, gegen das Zugband, z. B. unter der Wirkung einer Druck-oder Zugfeder, andrückbar ist. Bevorzugt ist das Führungselement eine weitere, antreibbare Rolle, die sowohl separat, bevorzugt aber ihrerseits von der bereits erwähnten antreibbaren Rolle antreibbar ist. Ein Andrücken des Führungselementes an das Zugband ist in der Regel nur dann er forderlich, wenn das Zugband in kraftschlüssiger Weise an der antreibbaren Rolle zur Anlage kommen muß; im Falle eines Formschlusses zwischen der antreibbaren Rolle und dem Zugband reicht es aus, wenn das Führungselement das Zugband lediglich in dessen Transportrichtung führt.

Als absatzweise wiederholt in derselben Antriebsrichtung mittels eines zweiten Griffelementes betätigbare, das Zugelement also absatzweise wiederholt in dieselbe Richtung ziehend transportierende "Antriebseinrichtung" eignen sich, im Sinne der Erfindung, alle mechanischen oder fluidischen Kraftübertrager mit Rücklaufsperre, wie Zahnradgetriebe mit Sperrklinke, insbesondere sog. Knarren, Fluidpumpen, insbesondere Hydraulikpumpen mit Rückschlagventilen und dergleichen.

Ein das Seilzuggerät aufnehmendes "Gehäuse" kann sowohl offen als auch, wie bevorzugt, im wesentlichen geschlossen gestaltet sein und hat in erster Linie die Aufgabe, die starren und bewegten Teile aufzunehmen bzw. ihnen als Lager zu dienen und sie, soweit nötig, auch vor unerwünschten Außeneinwirkungen zu schützen.

Ein erfindungsgemäßes Seilzuggerät hat unter anderem folgende Vorteile:

-es kann mit einer einzigen Hand betrieben werden;

-es kann gleichzeitig die Funktion eines Haltegriffes übernehmen;

- es kann in Relation zu den Dimensionen des Zugbandes vergleichsweise kleine Abmessungen aufweisen;

-es ermöglicht ein von der Betätigung des Seilzuggerätes unabhängiges Benutzen der zweiten Hand der Bedienperson, z. B. um dieser einen günstigen körperlichen Halt zu verschaffen;

-es ist auf Segelsurfern einsetzbar und ermöglicht eine Veränderung des Segel-oder Masttrimms während des Surfens, also während die zu trimmenden Teile unter erheblicher Zugbelastung stehen;

-es ist einfacher zu bedienen als herkömmliche Seilzuggeräte;

-eine besondere Aufmerksamkeit bei der Betätigung des Seilzuggerätes ist nicht erforderlich, da es besonders funktionssicher ist.

Wenn, gemäß einer besonderen Ausführungsform der Erfindung, eine Rückführeinrichtung für das Zugband in Form einer Kupplung vorgesehen ist, wird durch diese ein Zurückziehen (Rückführen des Zugbandes) entgegen der Zugrichtung möglich. Die Kupplung kann sowohl der antreibbaren Rolle bzw. deren Antriebseinrichtung, als auch dem das Zugband an der antreibbaren Rolle in Anlage haltenden Führungselement zugeordnet sein, insbesondere kann das Zugband als Zwischenglied zwischen den zusammenwirkenden Kupplungselementen fungieren; diese Kupplungselemente umfassen bevorzugt auch die antreibbare Rolle einerseits und das Führungselement andererseits.

Zweckmäßige Ausgestaltungen des Erfindungsgegenstandes die insbesondere ein Seilzuggerät mit relativ wenigen und/oder einfachen und/oder robusten Bauteilen und eine besonders wirkungsvolle Verwendung des Seilzuggerätes gewährleisten, sind in weiteren Ansprüchen enthalten.

Die vorerwähnten erfindungsgemäß zu verwendenden Bauteile unterliegen in ihrer Größe, Formgestaltung, Materialauswahl und technischen Konzeptionen keinen besonderen Ausnahmebedinungen, so daß die in dem jeweiligen Anwendungsgebiet bekannten Auswählkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der mehrere bevorzugte Ausführungsformen eines erfindungsgemäßen Seilzuggerätes dargestellt worden sind. In der Zeichnung zeigen:

Fig. 1a bis 1c ein erfindungsgemäßes Seilzuggerät im Längsschnitt in drei verschiedenen Arbeitspositionen;

Fig. 2a und 2b von einem ähnlichen Seilzuggerät zwei antreibbare, ein Seil zwischen ihren Umfangsflächen einklemmende Rollen in Seitenansicht bei Verwendung eines dünnen Seiles (Fig. 2a) bzw. eines dickeren Seiles (Fig. 2b);

Fig. 3a bis 3c von einem erfindungsgemäßen Seilzuggerät eine antreibbare Rolle in perspektivischer Ansicht in drei verschiedenen Ausführungsformen;

Fig.4 eine weitere Ausführungsform einer antreibbaren Rolle im Achsialschnitt;

Fig. 5a und 5b zwei verschiedene Ausführungsformen eines erfindungsgemäßen Seilzuggerätes in Seitenansicht (Fig. 5a) bzw. in perspektivischer Darstellung (Fig. 5b);

Fig. 6 von einem erfindungsgemäßen Seilzuggerät eine Antriebseinrichtung im Achsialschnitt durch eine antreibbare Rolle;

Fig. 7 von einem weiteren erfindugnsgemäßen Seilzuggerät eine gegenüber Figuren 1 bzw. 2 geänderte Ausführungsform von zwei antreibbaren Rollen mit einer Kupplung in stirnseitiger Ansicht bezüglich der Rollen;

Fig. 8 eine bezüglich Fig. 7 alternative Ausführungsform von zwei antreibbaren Rollen mit Kupplung in ähnlicher Darstellungsweise wie in Fig. 7;

Fig. 9 von einer weiteren Ausführungsform eines erfindungsgemäßen Seilzuggerätes eine antreibbare Rolle mit dazu im Formschluß befindlichen Zugband in stirnseitiger Seitenansicht (bezüglich der antreibbaren Rolle);

Fig. 10 von einer weiteren Ausführungsform eines Seilzugerätes eine antreibbare und eine weitere Rolle mit einer zwischen diesen wirkenden Kupplung;

Fig. 11 von einem weitern erfindungsgemäßen Seilzuggerat eine Kipphebelanordnung in Seitenansicht;

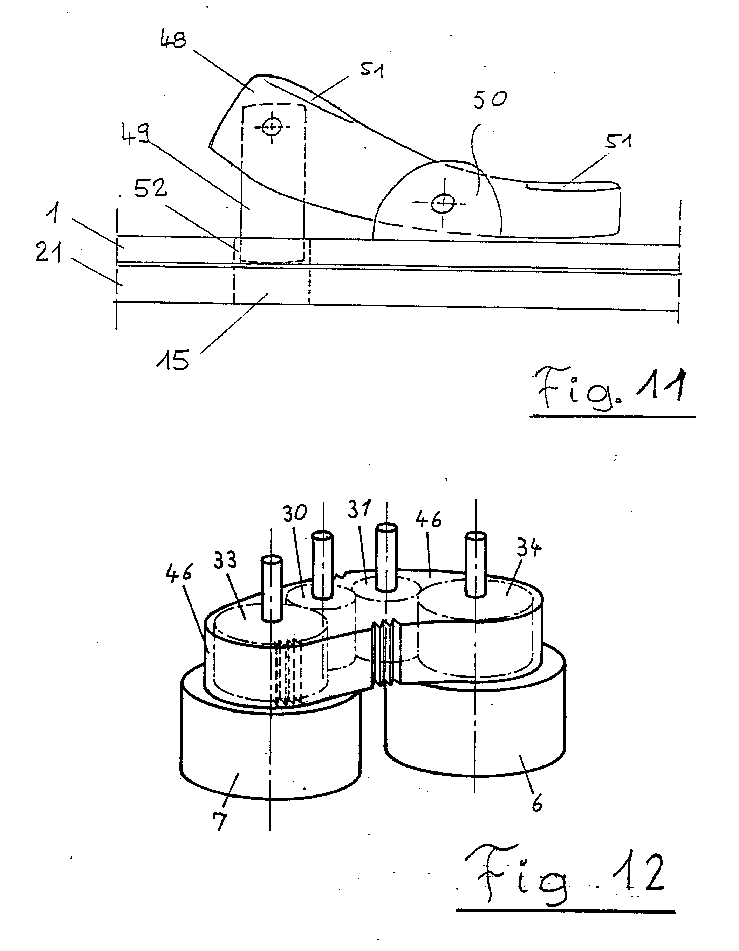

Fig. 12 von dem Seilzuggerät entsprechend der Ausführungsform von Fig. 8 eine perspektivische Darstellung von zwei antreibbaren Rollen mit Getriebe und einem das Getriebe kapselden Gehäuse;

Fig. 13 von einem Gehäuse eines erfindungsgemäßen Seilzuggerätes ein Verlängerungsbereich im Achsialschnitt sowie

Fig. 14a bis 14d eine weitere Ausführungsform eines erfindungsgemäßen Seilzuggerätes in montiertem Zustand in Seitenansicht (Fig. 14a), in stirnseitiger Ansicht (Fig. 14b - Ansicht A gemäß Fig. 14a) sowie in Ansicht von oben in zwei Arbeitspositionen (Fig. 14c und 14d - Ansicht B gemäß Fig. 14a).

In der Zeichnung sind identische wie auch gleichartige Bauteile mit denselben Bezugszeichen gekennzeichnet.

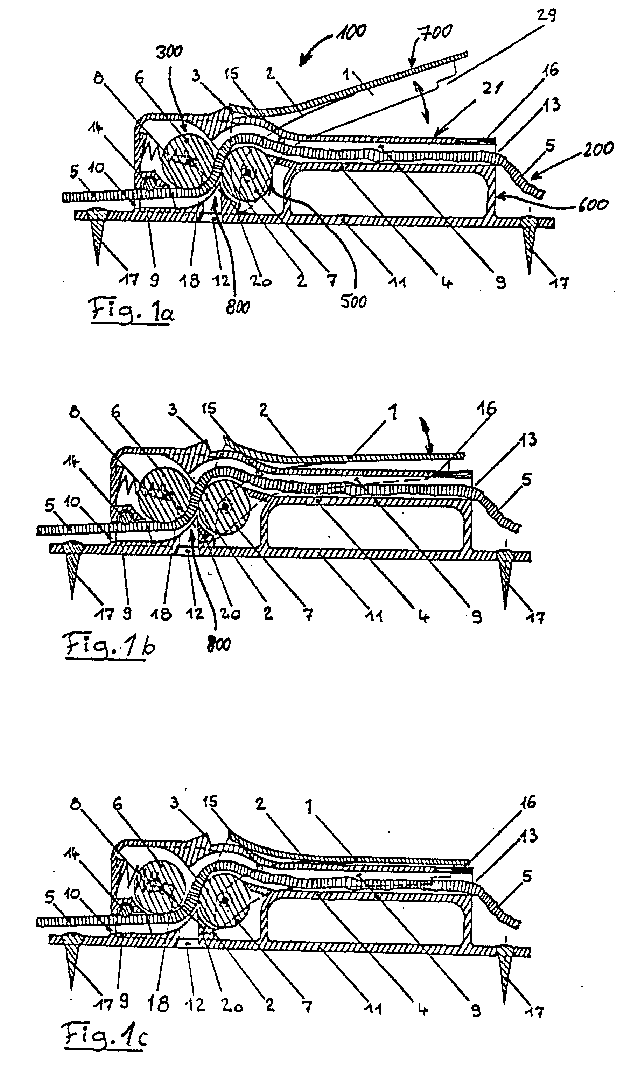

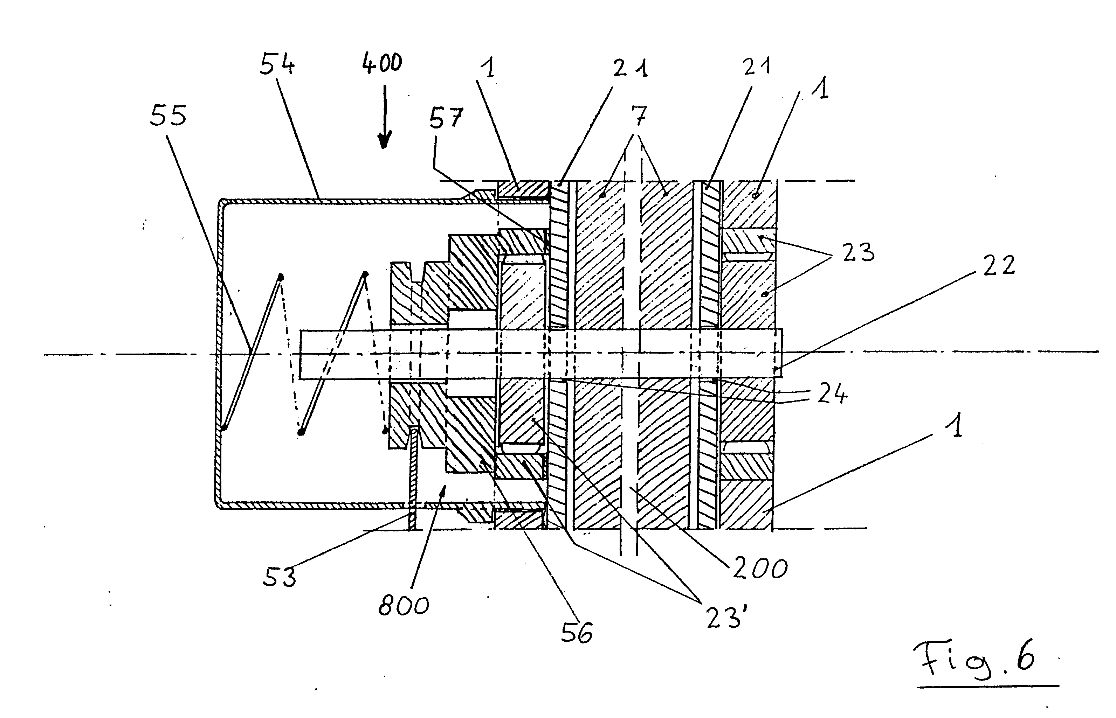

Bei der ersten Ausführungsform der Erfindung gemäß Figuren 1a-1c handelt es sich um ein besonders einfach gebautes Seilzuggerät 100, welches im wesentlichen aus folgenden Bauteilen besteht: einer antreibbaren Rolle 7, einer mittels einer Feder 8 lateral gegen die antreibbare Rolle 7 achsparallel andrückbare weitere Rolle 6 als Führungselement 300 für ein als Seil 5 ausgebildetes Zugband 200, auf das die Umfangsfläche 500 der antreibbaren Rolle 7 unter Mitwirkung der weiteren Rolle 6 mit der Feder 8 in Zug-und Haltesinne wirkt. Außerdem ist ein als erstes Griffelement 600 in der Form eines Bügels 4 ausgebildetes, mittels einer Montageplatte 11 und Schrauben 17 festschraubbares Gehäuse 21 zur Aufnahme und Lagerung aller erforderlichen Bauteile vorgesehen. Ferner ist auch ein zweites, in der Zeichnung als Hebel 1 ausgebildetes Griffelement 700 vorgesehen, das eine in Fig. 6 beispielhaft dargestellte Antriebseinrichtung 400 für den Zugbetrieb absatzweise wiederholt betätigt und dadurch die antreibbare Rolle 7 absatzweise in dieselbe Richtung weiterdreht; in der Zeichnung wird das Seil 5 dadurch nach rechts gezogen. Zu diesem Zweck wird der Hebel 1 zwischen seiner obersten (in Figur 1a dargestellten) Anschlagposition und seiner (in Figur 1b dargestellten) unteren Anschlagposition (Halteposition) auf-und niederbewegt, wobei der Hebel durch eine Feder 2 selbsttätig angehoben und von einer (in der Zeichnung der Übersichtlichkeit halber nicht dargestellten) einzigen Hand einer Bedienperson niedergedrückt wird.

Damit das Seil 5 in der nach dem Niederdrücken des Hebels 1 erreichten Halteposition während des Anhebens des Hebels 1 verbleibt, ist die Antriebseinrichtung 400 mit vorzugsweise zwei an sich bekannten Sperrklinkenmechanismen, insbesondere Knarren, ausgestattet (Fig.6). Der eine Sperrklinkenmechanismus wirkt zwischen dem Gehäuse 21 und der antreibbaren Rolle 7, so daß sich diese ( in der in Figuren 1a-1c gewählten Darstellung) nur im Uhrzeigersinn drehen kann - nicht aber zurück. Der zweite Sperrklinkenmechanismus wirkt zwischen dem Hebel 1 einerseits und der antreibbaren Rolle 7 andererseits, so daß letztere nur beim Niederdrücken des Hebels 1 angetrieben wird.

Die Bedienperson hält, während sie den Hebel 1 niederdrückt und wieder hochkommen läßt während der ganzen Zeit auch das Griffelement 600, welches also die Betätigung der Bedienhand im Sinne einer Zangenbewegung ermöglicht, für die Bedienperson aber gleichzeitig auch über die Bedienhand ein Sichfesthalten ermöglicht, so daß mit der zweiten Hand andere Arbeiten gleichzeitig ausgeführt werden können. Die Anordnung und Formgestaltung des ersten Griffelementes 600 und des Zweiten Griffelementes 700 sind entsprechend ausgewählt.

Ein am Gehäuse 21 verschiebbar angeordnetes Plättchen 16 dient in seinem (in der Zeichnung) nach links geschobenen Zustand als unterer Anschlag für den Hebel 1, während das Gehäuse 21 einen starren oberen Anschlag 3 aufweist. Eine im Hebel 1 vorgesehene Einkerbung 29 kommt mit dem nach links geschobenen Sperrplättchen 16 im niedergedrückten Zustand des Hebels 1 zur Anlage. Wenn das Sperrplättchen 16 jedoch, wie in Fig. 1c dargestellt, nach rechts verschoben ist, kann der Hebel 1 noch tiefer niedergedrückt werden. Ein an dem Hebel 1 vorgesehener Nocken 20 vrschiebt dann eine Schubstange 18, in deren axiale Richtung. Das dem Nocken 20 gegenüberliegende Ende der Schubstange 18 verschiebt dadurch die weitere Rolle 6 entgegen der Kraft der Feder 8 nach links, d.h. von der antreibbaren Rolle 7 und dem Seil 5 fort. Eine derart ausgebildete Kupplung 800 ermöglicht die Freigabe des Seiles 5 und damit ein Zurückziehen (in der Zeichnung nach links) also entgegen der Zugrichtung des Seilzuggerätes. Durch die Verschiebbarkeit der weiteren Rolle 6 quer zu ihrer Achse wird also einerseits eine Anpassung an verschieden dicke Seile sowie eine kraftschlüssige Verbindung zwischen dem Seil und der antreibbaren Rolle 7 geschaffen, ande rerseits wird durch diese Lagerung und Führung der Rolle 6 aber auch ein Auskuppeln zwecks gebremster oder nicht gebremster Rückführung des Seiles 5 geschaffen.

Das Seil 5 verläuft durch einen innerhalb des Gehäuses 21 gebildeten, von Wandungen zumindest teilweise umgebenen Kanal 9 . Die Einführung des Seiles 5 in den Kanal, der das Seil den Rollen 6 und 7 zuführt und es von diesen wieder fortführt, ist wahlweise durch eine nach vorne zeigende Öffnung 10 oder durch eine in der Montageplatte 11 befindliche Öffnung 12 von unten möglich. Beim Spannen und Weiterziehen des Seiles 5 wird dieses somit wahlweise durch eine dieser Öffnungen in das Seilzuggerät 100 hineingezogen. Zur Verminderung der Seilreibung ist vorzugsweise zumindest eine Rolle 14 im zugseitigen Mündungsbereich des Kanales vorgesehen. Das von den Rollen 6 und 7 durch sie hindurchgezogene lose Seilende verläßt das Seilzuggerät - schließlich durch eine hintere Öffnung 13.

Wenn der Hebel 1 in seiner unteren Halteposition (gemäß Fig.1b) verbleiben soll, muß ein in ein Loch 15 des Gehäuses 21 einschiebbarer, an dem Hebel 1 angelenkter Haltebolzen 49 (Siehe Fig.11) bei Erreichen dieser Ruhestellung mit dem Daumen der Bedienhand eingedrückt und die Druckkraft auf den Hebel 1 vermindert werden. Zum Befreien des Hebels 1 aus dieser Ruhestellung wird der Haltebolzen 49 bei gleichzeitigem kurzen Niederdrücken des Hebels 1 eingedrückt und wieder losgelassen bzw. über einen in einem Lager 50 schwenkbaren Kipphebel 48 mit Druckplatten 51 angehoben (Fig.11), wodurch der Hebel 1 freigegeben wird, während der Haltebolzen 49 in einem Loch 52 des Hebels 1 verbleibt.

Die in Fig. 1c dargestellte Freigabestellung für das Seil 5 ermöglicht einerseits ein Bewegen des Seiles 5 entgegen der Zugrichtung oder auch sein völliges Herausziehen aus dem Seilzuggerät. Diese Stellung ist aber darüberhinaus auch dann nützlich, wenn das Seil noch nicht unter Spannung ist (weil es lose durchhängt), was vor Beginn des ersten Zugvorganges zum Beispiel der Fall ist. Dann kann das Seil zunächst einmal schnell straff gezogen werden; es muß hierzu lediglich nach hinten aus der hinteren Öffnung 13 herausgezogen werden, bis es sich strafft. Bei Zwischenstellungen des Hebels 1 zwischen der Halteposition gemäß Fig. 1b und der Freigabeposition Fig. 1c, kann das Seil auch in abgebremster Form entgegen der eigentlichen Zugrichtung zurückgezogen werden. Durch entsprechende Dosierung der Kraft der Bedienhand auf den Hebel 1 entsteht also ein regulierbarer Anpreßdruck, durch welchen eine unterschiedliche Bremskraft zwischen völliger Freiheit bis zum Blockieren auf das Seil 5 ausgeübt werden kann. Das Seilzuggerät wirkt auf diese Weise zugleich als Seilbremse wie auch als Seilbefestigung für beliebige Seillängen.

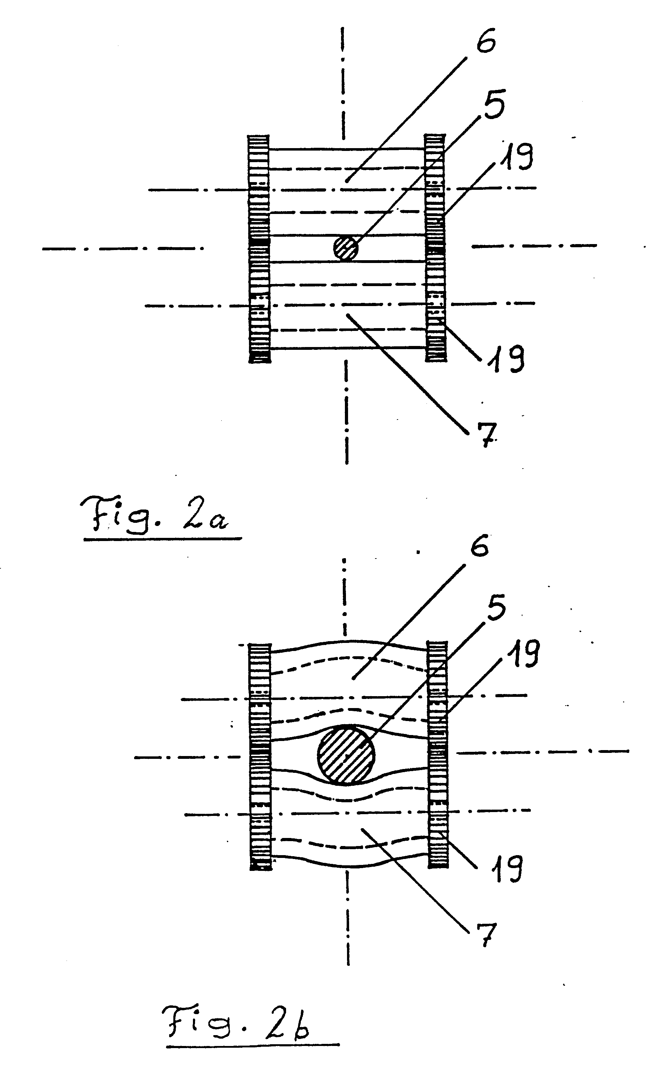

Figuren 2a und 2b zeigen eine besonders vorteilhafte Ausführungsform des Seilzuggerätes gemäß Fig. 1a bis 1c, denn die Rollen 6 und 7 sind beidseitig mit ineinandergreifenden (kämmenden), Zahnrädern 19 versehen, wodurch auch die weitere Rolle 6 mitangetrieben wird. Hierdurch wird die erzielbare Zugkraft erhöht. Die Rollen 6 und 7 können auch aus einem elastischen Material hergestellt sein, so daß sie sich durchbiegen können und deshalb die Nutzung von Seilen unterschiedlicher Durchmesser zulassen. Es versteht sich, daß die Umfangsflächen 500 der Rollen 6 und 7 den Eigenschaften des Zugbandes entsprechend konfiguriert, z.B. mit einem entsprechend rauhen Belag versehen sind. - Bei dieser Auführungsform der Rollen 6 und 7 können die auf ihnen fest angebrachten Zahnräder 19 vorteilhafterweise, auch in ständigem Eingriff gehalten werden. Die für die erforderliche Reibungskraft (bezüglich des Zugbandes) benötigte Anpreßkraft steht dann dadurch zur Verfügung, daß die Rollen 6 und 7 hohl sind und/oder aus einem flexiblen Material bestehen, so daß das Zugband eine elastische laterale Durchbiegung der Rollen erzwingt (Fig.2b). Die Friktionskraft nimmt bei zunehmender Dicke des Zugbandes vorteilhafterweise zu.

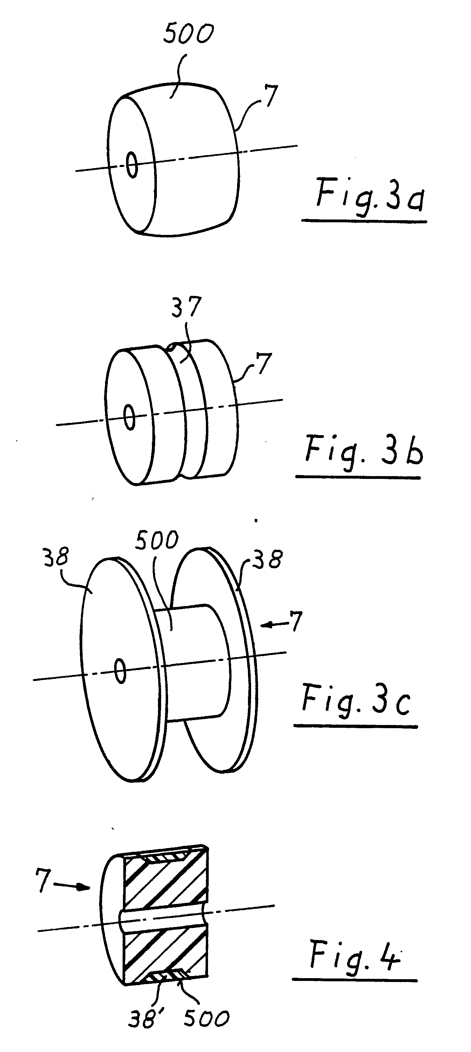

Besonders vorteilhafte Gestaltungen der Umfangsflächen 500 der antreibbaren Rolle 7 und - soweit das Führungselement 300 ebenfalls als Rolle (weitere Rolle 6) ausgebildet ist, auch die Umfangsflächengestaltung der Rolle 6 ergeben sich aus den Figuren 3a bis 3c sowie Fig.4:

Gemäß Fig. 3a kann der Rollendurchmesser zu den Seiten hin vermindert sein, was eine automatische Justierung des Zugbandes 200 zur Mitte der Rollen hin bewirkt. Dieser Vorteil tritt besonders bei Verwendung von im Querschnitt flachen Zugbändern zutage.

Gemäß Figuren 3b und 3c kann zur Verbesserung der Führung des Zugbandes auch eine die Umfangsfläche 500 umlaufende Rille 37 (Fig. 3b) oder können seitlich angeordnete Führungsscheiben 38 vorgesehen sein. Bei der Ausführungsform entsprechend Fig. 3c können der Rollenkörper und die Führungsscheiben aus relativ druckfestem Material bestehen, während ein zwischen den Führungsscheiben 38 sich erstreckender Ring 38′ die Verwendung unterschiedlich dicker Zugbänder ermöglicht (gemäß Fig. 4).

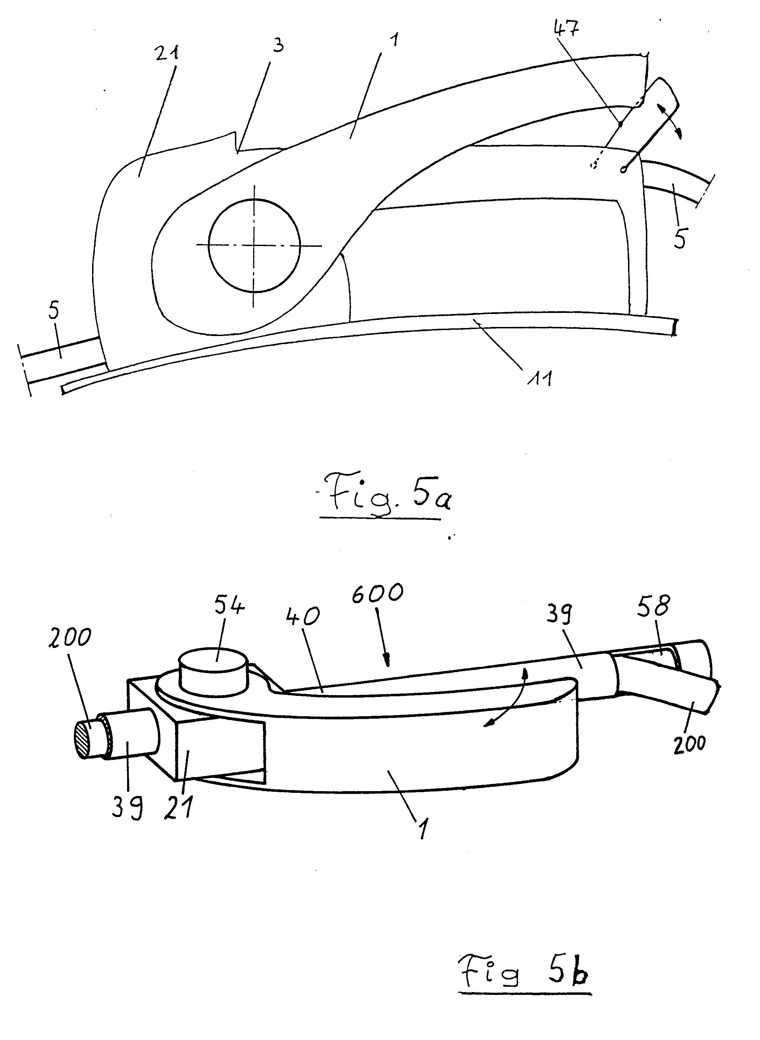

Je nach Anwendungsbereich des Seilzuggerätes können das Gehäuse 21 und dessen Befestigungsmöglichkeiten sehr unterschiedlich sein. Dies zeigen Figuren 5a und 5b: die Ausführungsform gemäß Fig. 5a entspricht im wesentlichen der Ausführungsform gemäß Fig. 1a bis 1c, wobei allerdings der Hebel 1 in seiner unteren Anschlagstellung nicht von einem Kipphebel, sondern von einem schwenkbaren Bügel 47 niedergehalten werden kann.

Die Ausführungsform gamäß Fig. 5b eignet sich besonders für die Integration des Seilzuggerätes in ein Rohr, z.B. den Gabelbaum für ein Surfsegel. Hierzu weist das Gehäuse 21 einen z.B. rohrförmigen Anschlußstutzen 39 auf, der in ein anderes Rohr hinein oder über ein anderes Rohr oder Rundmaterial schiebbar und mit diesem verbindbar ist. Rohrförmige Anschlußstutzen 39 eignen sich insbesondere als Mündungsöffnung des Gehäuses 21 zur Aufnahme des Zugbandes 200, das somit z.B. innerhalb eines der Übersichtlichkeit halber nicht eigens dargestellten an sich bekannten Gabelbaumes verlaufen kann. Der Anschlußstutzen 39 kann sich auch an eine rohrförmige Verlängerung 40 des Gehäuses 21 anschließen. Diese rohrförmige Verlängerung kann einerseits dazu dienen, eines der beiden Vereiche des Zugbandes 200 zu führen. Andererseits kann es als erstes Griffelement 600 dienen. Die Länge eines solchen Verlängerungsstückes 40 kann so groß sein, daß die gesamte in Fig. 5b dargestellte Anordnung als eine Gabelbaumhälfte dient (wobei dann eine entsprechende Durchbiegung vorgesehen wird). Mit Hilfe handelsüblicher Kopf-und Endstücke können solche Gabelbaumhälften zu einem kompletten Gabelbaum zusammengefaßt werden. Das Zugband 200 kann an beliebiger Stelle durch ein Loch 58 in der Rohrwand des Verlängerungsstückes oder des Anschlußstutzens 39 herausgeführt werden.

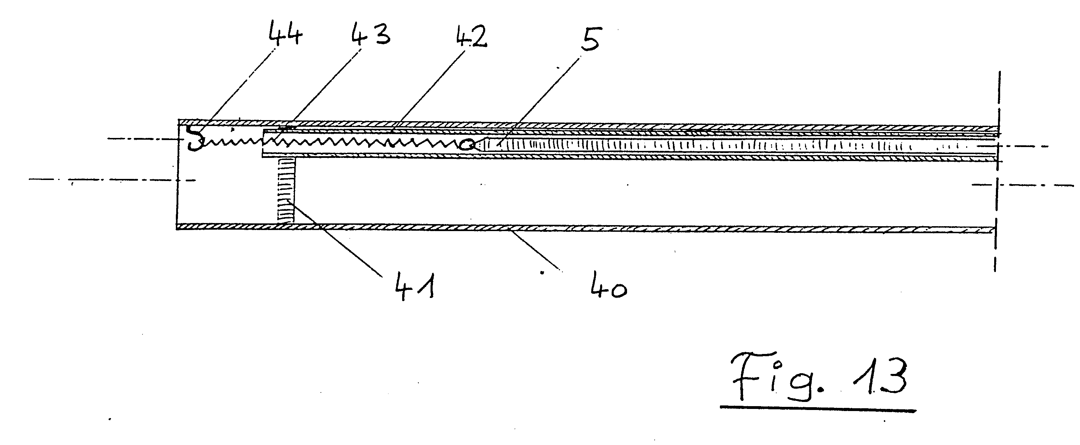

Bei Verwendung solcher oder ähnlicher Rohrstücke, in denen auch das Zugband 200 geführt wird, empfiehlt es sich, eine Anordnung gemäß Fig. 13 innerhalb des Verlängerunsstückes 14 vorzusehen. Diese Anordnung besteht zumindest aus einem Federelement 43, das mit seinem einen Ende an dem Verlängerungsstück 40 z.B. an einem Haken 44 befestigt ist; das andere Ende des Federelementes 43 ist mit dem von Hause aus losen Ende des Zugbandes, insbesondere eines Seiles 5, im Zugsinne befestigt. Dadurch wird eine Straffung des losen Endes des Zugbandes bewirkt und verhindert, daß dieses sich im Verlängerungsstück 40 staut. Der wesentliche Teil des Federelementes 43, bevorzugt eines Gummibandes, und des freien Endes des Zugbandes befinden sich bevorzugt im Inneren eines nur wenig größer kalibrierten Rohres 42, welches innerhalb des Verlängerungsstückes 40, z.B. durch Schottwände 41 gehalten ist. Durch das Verhältnis der Größen des inneren Durchmessers des Rohres 42 zum Durchmesser des Zugbandes sowie durch eine Glättung der Innenwandung des Rohres 42 wird das Gleiten des Zugbandes erleichtert. Durch das Vorsehen von Schottwänden 41 an den Enden des Rohres 42 kann bei entsprechender Abdichtung der Schottwände ein Eindringen von Wasser in das Verlängerungsstück 40 bzw. einem Gabelbaum oder dergleichen verhindert werden und dieser schwimmfähig gehalten werden.

Gemäß Fig. 6 ist eine erfindungsgemäße, in Figuren 1a bis 1c vor bzw. hinter der Bildebene angeordnete Antriebseinrichtung 400 z.B. folgendermaßen aufgebaut:

Das Gehäuse 21 nimmt in seinem Inneren die als Transportelement ausgebildete antreibbare Rolle 7 auf. Dieses sitzt drehfest auf einer Antriebswelle 22 und wird durch diese angetrieben. Die Antriebswelle 22 ist in zwei miteinander fluchtenden Bohrungen 24 des Gehäuses 21 drehbar gelagert. Der Antrieb der Antriebswelle 22 erfolgt durch den Hebel 1 mittels Zwischenschaltung einer doppelt wirkenden Knarre 23,23' und einer von Hand lösbaren Kupplung 800. Die doppelt wirkende Knarre 23,23' ist in die zwei Funktionsteile 23 und 23' aufgeteilt, wobei auf jeder Seite des Gehäuses eines der Funktionsteile angeordnet ist. Der Hebel 1 ist drehbar um das Zentrum der Antriebswelle 22 gelagert. Die Hin-und Herbewegung des Hebels 1 erfolgt wie im Zusammenhang mit Figuren 1a bis 1c beschrieben. Die so erzeugte Bewegung des Hebels 1 wird mit Hilfe der Knarre 23 in eine Drehbewegung der Antriebswelle 22 umgewandelt,

wobei die Knarre 23' die Antriebswelle 22 gegen Rücklauf in Folge der von dem Zugband 200 herrührende Zugkraft sperrt. Diese Sperre wirkt sich dann aus, wenn die Betätigung des Hebels 1 unterbrochen wird, und sie verhindert somit das ungewollte Zurücklaufen des unter Zugkraft stehenden Zugbandes 200. Im Falle, daß ein Zurücklaufen des Zugbandes ermöglicht werden soll, muß die Kupplung 800 gelöst werden. Die Kupplung 800 verbindet und löst den Rücklauf verhindernden Teil 23' vom Gehäuse 21. Es können die bekannten Knarrenarten eingesetzt werden, wie die ( dargestellten) radial oder auch axial wirkende Knarren.

Es können die bekannten Kupplungsarten verwendet werden, wie Einscheibenkupplungen, Mehrscheibenkupplungen, eine um ein Reibrad gelegte Bandbremse oder eine lösbare Verbindung nach dem Prinzip der Trommelbremse. In Fig. 6 dargestellt und bevorzugt wird eine Einscheibenkupplung. Hierbei ist die eine ringförmige Kupplungsscheibe 56 fest mit dem einen Rücklauf verhindernden Ring der Knarre 23' verbunden, der sich über einen Kupplungsbelag 56 in axialer Richtung gegen das Gehäuse 21 abstützt. Die Kupplungsscheibe 56 der Kupplung 800 ist auf der Antreibswelle 22 axial vreschiebbar und drehfest gelagert. Zum Einkuppeln wird die Kupplungsscheibe 56 von einer Feder 55 gegen das Gehäuse 21 angepreßt; zum Auskuppeln wird die Kupplungsscheibe 56 durch einen Hebel 53 gegen die Feder 55 gedrückt, wobei sich die Feder 55 gegen eine am Gehäuse 21 befestige Kappe 54 abstützt. Die Antriebswelle 22 wird im Querschnitt bevorzugt quadratisch ausgebildet, sie kann aber auch sechseckig oder mit einer Längsnut versehen oder in sonstiger Weise so ausgebildet sein, daß die Befestigung der verschiedenen Antriebs-und Bremselemente erleichtert wird.

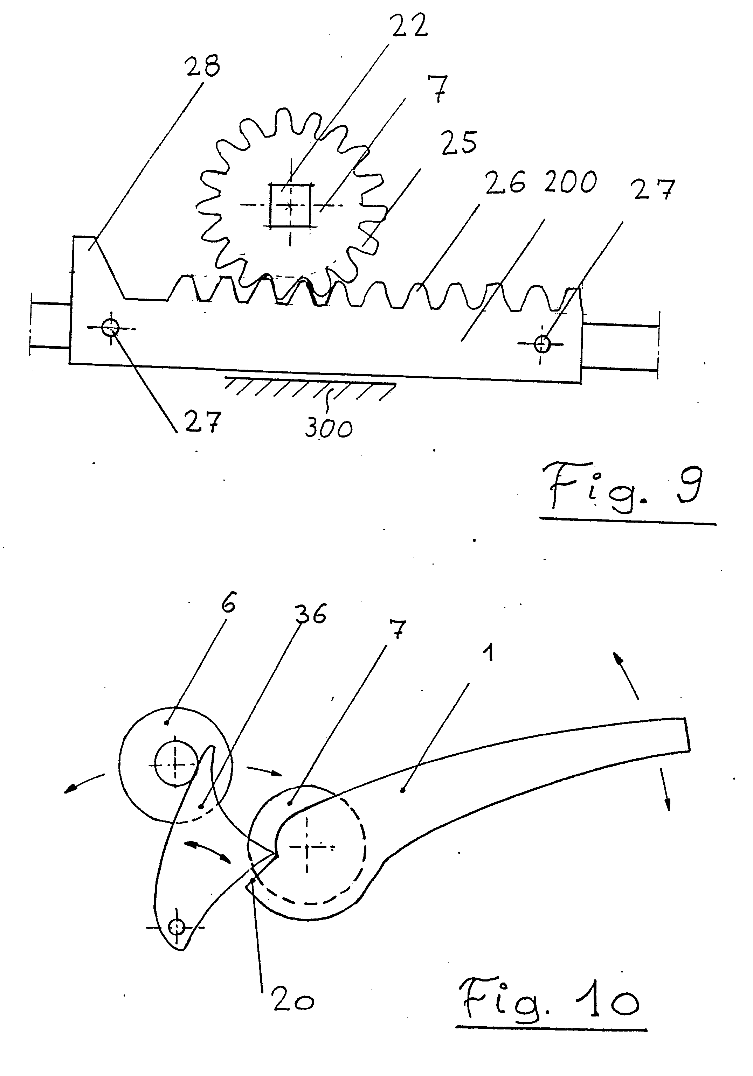

Der Transport des Zugbandes 200 kann gemäß Fig. 9 auch unter der Wirkung eines Formschlusses erfolgen. Hierzu weist die antreibbare Rolle 7 auf ihrer Umfangsfläche 500 einen umlaufenden Zahnkranz 25 auf, während das Zugband 200 als Zahnstange mit Zähnen 26 ausgebildet ist, die mit dem Zahnkranz 25 in ständigem Eingriff stehen. Das Zugband 200 wird in Bewegungsrichtung durch ein Führungselement 300 geführt; bevorzugt werden seitliche Führungsnocken und ein unteres Gleitbett. Die Zahnstange kann als Teil des Zugbandes 200 mittels Befestigungslöchern 27 oder dergleichen an einem oder beiden Enden mit einem vergleichsweise biegeelastischeren Material als weiterem Zugband verbunden werden (wie in Fig. 9 dargestellt). Die Zahnstange kann aber auch, wie ebenfalls bevorzugt, relativ lang und aus einem flexiblen, insbesondere biegeelastischen Material hergestellt sein. Ein an der Zahnstange endseitig angeordnetes Sperrelement 28 kann ein unbeabsichtigtes Herauslaufen der Zahnstange aus dem Verzahnungseingriff, z.B. beim Öffnen einer auf das antreibbare Rad 7 wirkenden Kupplung, verhindern. Die Anordnung gemäß Fig. 9 bewirkt eine besonders große Kraftübertragung.

Fig. 10 zeigt eine zu der Schubstange 18 gemäß Figuren 1a bis 1c alternative Möglichkeit zum Entkuppeln der Rollen 6 und 7. Hierzu dient ein Kipphebel 36; dieser wird auf der einen Seite von einem Nocken 20 des Hebels 1 angetrieben und bewegt seinerseits die Rolle 6 in derselben Weise wie die vorerwähnte Schubstange 18.

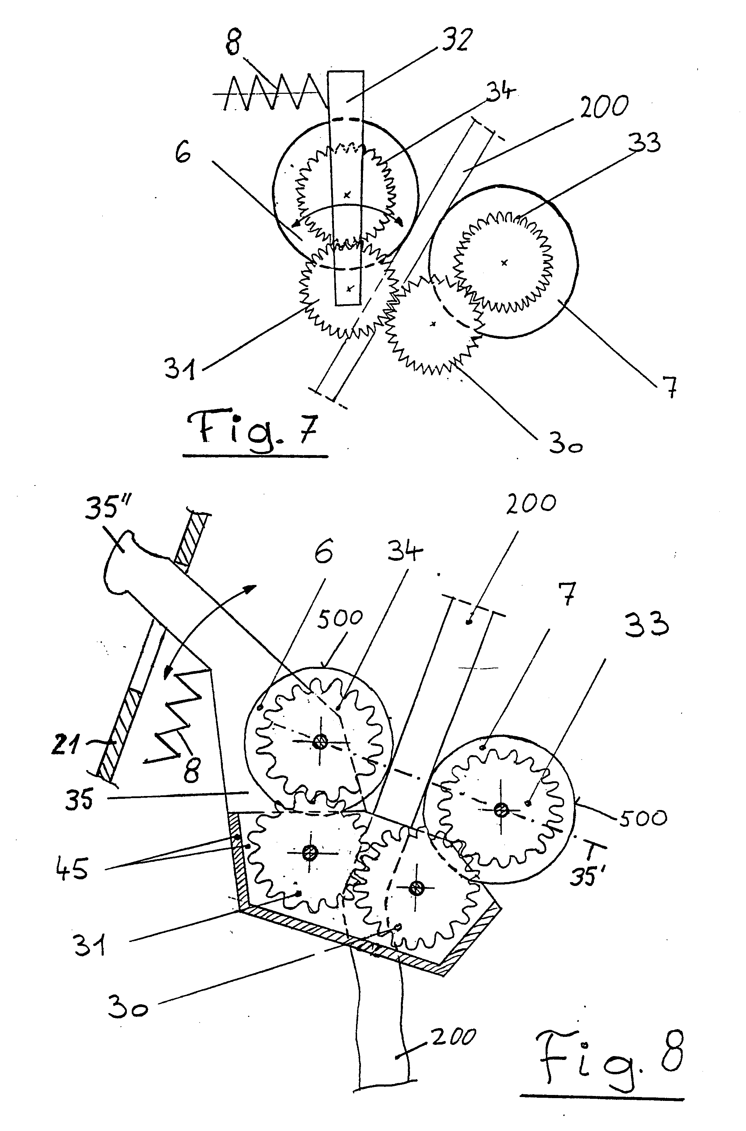

Besonders vorteilhafte Ausführungsformen der Erfindung, die sowohl ein Antreiben der weiteren Rolle 6 ermöglichen als auch den ständigen Eingriff der hierzu dienenden Zahnräder gewährleisten, obwohl die Kupplung 800 nach dem gleichen Prinzip wie in Figuren 1a bis 1c arbeitet, ist in Figuren 7 und 8 dargestellt. In beiden Fällen stehen die Rollen 6 und 7 mit ihren stirnseitigen Zahnkränzen 33 und 34 nur durch Zwischenschaltung von zwei miteinander kämmenden Zahnrädern 30 und 31 in Antriebsverbindung. Hierdurch bleibt die erforderliche Gegenläufigkeit der Drehungen beider Rollen 6 und 7 erhalten und die Rolle 6 kann bezüglich der Rolle 7 seitlich verschwenkt werden ohne daß die Verzahnungen außer Eingriff kommen. Zu diesem Zweck ist (gemäß Fig. 7) die Rolle 6 und das mit ihrer Verzahnung 34 kämmende Zahnrad 31 auf einer Schwinge 32 angeordnet, die um die Achse des Zahnrades 31 mit Unterstützung bzw. gegen die Kraft der Feder 8 schwenkbar ist. Um den vorteilhaften Synchronlauf für den Transport des Zugbandes 200 zu bewirken, müssen die vier Zahnkränze hierauf abgestimmte Anzahlen von Zähnen aufweisen.

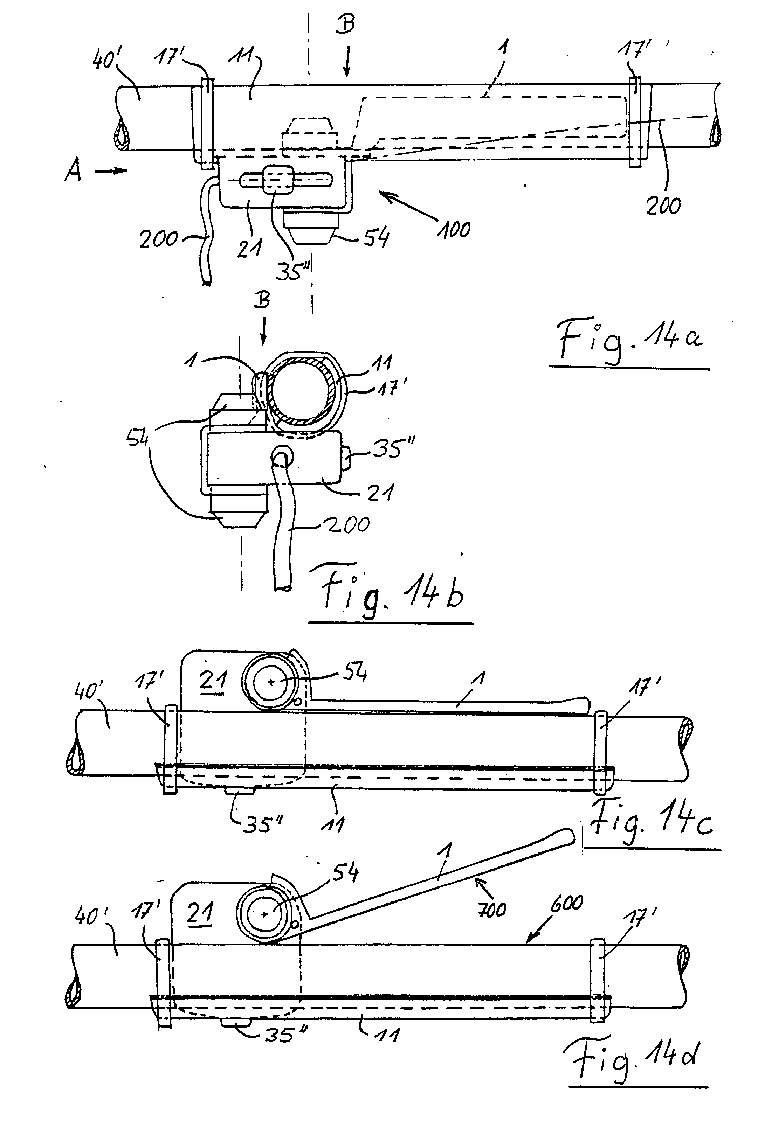

Auch bei der Ausführungsform gemäß Fig. 8 bewirken die Anordnung der Zahnkränze 33 und 34 sowie der Zahnräder 30 und 31 sowie ihr ständiger Eingriff miteinander über die drehfeste Verbindung des Zahnkranzes 33 mit der antreibbaren Rolle 7 und der drehfesten Verbindung des Zahnkranzes 34 mit der von der Rolle 7 zwangsangetriebenen weiteren Rolle 6, daß sich die Rolle 6 und die Rolle 7 zwangsläufig gegneinander in der Weise bewegen, daß sie das zwischen ihnen liegende Zugband 200 gemeinsam ziehen. Dabei wird eine die Rolle 6 sowie die Zahnräder 30 und 31 drehbar tragende und um die Achse des Zahnrades 30 schwenkbare Schwinge 35 mit Hilfe der Feder 8 in Richtung auf die antreibbare Rolle 7 gedrückt. Durch Zurückdrücken der Schwinge 35 gegen die Wirkungslinie der Feder 8 wird die Rolle 6 von der antreibbaren Rolle 7 schwenkend wegbewegt, so daß der Weg des Zugbandes 200 freigegeben wird. Das freie Ende der Schwinge 35 ragt aus dem Gehäuse 21 heraus (siehe auch Fig. 14) und dient somit als Hebel 35″ für das Zurückdrücken der Schwinge gegen die Kraft der Feder 8 im Entkupplungssinne. Auch hier wird ein Synchronlauf der Umfangsflächen 500 der Rollen 6 und 7 bevorzugt. Die Anordnung der Aschse des Zahnrades 30 zusammen mit der Lagerachse der Schwinge 35 auf derjenigen Seite der Verbindungsllinie 35′ der Achsen der beiden Zahnkränze 34 und 35, auf der sich das lose Zugbandende befindet, bewirkt in besonders vorteilhafter Weise, daß die von der Feder 8 ausgeübte Anpreßkraft dosiert in Abhängigkeit von der am Zugband 200 aufgebrachten Zugkraft automatisch verstärkt wird.

Um bei den Ausführungsformen gemäß Figuren 7 und 8 ein Einklemmen des Zugbandes 200 in den Getriebeteilen zu verhindern, wird, gemäß einer bevorzugten Ausführungsform der Erfindung, eine Trennwand 45 vorgesehen, die oberhalb des zur Aufnahme des Zugbandes dienenden Freiraumes aber unterhalb der Zahnräder 30 und 31 angeordnet ist.

Gemäß Fig. 21 kann ein noch verbesserter Schutz des Getriebes bzw. des Zugbandes 200 dadurch erreicht werden, daß das Getriebe von einem Gehäuse 46 umgeben ist, das an den Stirnflächender Rollen 6 und 7 anliegt und über eine z.B. faltenbalgähnliche Anordnung die erforderliche Bewegung der Schwinge 32 oder 35 gewährleistet. Ebenso empfiehlt sich eine Kapselung (Umhüllung) der weiteren drehbeweglichen Teile, wie der Knarre 23, 23′ und der Kupplung 800, die einzeln oder gemeinsam gekapselt werden. Eine solche Kapsel kann z.B. aus einem schaumgummiartigen Material bestehen, wodurch die Griffigkeit des Seilzuggerätes verbessert und durch stoßresorbierende Eigenschaft das Verletzungsrisiko für den Benutzer vermindert wird.

Die Ausführungsform gemäß Figuren 14a bis 14d eignet sich z. B. zum Nachrüsten eines erfindungsgemäßen Seilzuggerätes am Gabelbaum 40′ eines Segelsurfers. In diesem Fall ist die Montageplatte 11 des Gehäuses 21 rohrschalenförmig an den Durchmesser des Gabelbaumes 40′ angepaßt und an diesem mit Rohrschellen 17′ befestigt. Das Zugband 200 kann (wie dargestellt) mit seinem zugbelasteten Teil innerhalb des Gabelbaumes verlaufen. Die Montageplatte 11 dient, gemeinsam mit dem Gabelbaum 40′ als erstes Griffelement 600.

Bezugszeichenliste

1 Hebel
2 Feder
3 Anschlag
4 Bügel
5 Seil

6 Rolle
7 antreibbare Rolle
8 Feder
9 Kanal
10 Öffnung
11 Montageplatte
12 Öffnung
13 Öffnung
14 Rolle
15 Loch
16 Sperrplättchen
17 Schrauben
17' Rohrschellen
18 Schubstange
19 Zahnräder
20 Nocken
21 Gehäuse
22 Antriebswelle
23 Knarre
23' Knarre
24 Bohrungen
25 Zahnkranz
26 Zähne
27 Befestigungslöcher
28 Sperrelement
29 Einkerbung
30 Zahnrad
31 Zahnrad
32 Schwinge
33 Zahnkranz
34 Zahnkranz
35 Schwinge
35' Verbindungslinie
35" Hebel
36 Kipphebel
37 Rille
38 Führungsbereich
38' Ring
39 Anschlußstutzen
40 Verlängerungsstück
40' Gabelbaumrohr
41 Schottwand
42 Rohr
43 Federelement
44 Haken
45 Trennwand
46 Gehäuse
47 Bügel
48 Kipphebel
49 Haltebolzen
50 Lager
51 Druckplatten
52 Loch
53 Hebel
54 Kappe
55 Feder
56 Kupplungsscheibe
57 Kupplungsbelag

58 Loch
100 Seilzuggerät
200 Zugband
300 Führungselement
400 Antriebseinrichtung
500 Unfangsfläche
600 1. Griffelement
700 2. Griffelement
800 Kupplung
A Ansicht
B Ansicht

**Ansprüche**

1. Seilzuggerät zumindest zum Ziehen und Halten eines Seiles (5) oder ähnlichen Zugbandes (200) unter Last,
**gekennzeichnet durch**
a) mindestens eine mit ihrer Umfangsfläche (500) auf das Zugband (200) im Zug-und Haltesinne wirkende antreibbare Rolle (7),
b) ein das Zugband (200) zumindest in Zug-und Haltebetrieb an der antreibbaren Rolle (7) in Anlage haltendes Führungselement (300),
c) eine auf die antreibbaren Rolle (7) zumindest im Zug-und Haltesinne wirkende Antreibseinrichtung (400)
d) ein das Seilzuggerät (100) aufnehmendes Gehäuse (21),
e) ein mit dem Gehäuse (21) ortsfest verbundenes erstes Griffelement (600) für zumindest eine Hand einer bedienperson sowie
f) ein zweites Griffelement (700) zum absatzweise wiederholten Betätigen der Antriebseinrichtung (400) im Zugbetrieb mit der zumindest einen Hand der Bedienperson, wobei das erste und zweite Griffelement (600 und 700) derart einander zugeordnet sind, daß sie von einer einzigen Hand der Bedienperson stets gemeinsam greif-und betätigbar sind.

2. Seilzuggerät nach Anspruch 1, dadurch gekennzeichnet, daß Führungselement (300) eine weitere Rolle (6) ist.

3. Seilzuggerät nach Anspruch 1 oder 2, dadurch gekennzeichnet, daß das Führungslement (300) eine weitere antreibbare Rolle (6) ist.

4. Seilzuggerät nach einem der Ansprüche 1 bis 3, gekennzeichnet durch eine Rückführreinrichtung für das Zugband (200) in Form einer Kupplung (800).

5. Seilzuggerät nach einem der Anspruche 1 bis 4, gekennzeichnet durch Anschlußstutzen (39) zum Verbinden des Gehäuses (21) mit einem Rohr-oder Stangenende.

6. Seilzuggerät nach einem der Ansprüche 1 bis 5, gekennzeichnet durch zumindest ein mit dem Gehäuse (31) verbundenes Rohr (39; 40; 42) zum Führen des Zugbandes (200).

7. Seilzuggerät nach einem der Ansprüche 1 bis 6, dadurch gekennzeichnet, daß das

a) das Führungselement (300) eine weitere gegen das Zugband (200) andrückbare und von der antreibbaren (ersten) Rolle (7) ihrerseits antreibbare Rolle (6) ist,

b) die Rollen (6 und 7) über ein Getriebe (30,31) im Antriebssinne mittelbar verbunden sind und

c) die weitere Rolle (6) um eine Achse des Getriebes (30,31) schwenkbar ist.

8. Seilzuggerät nach einem der Ansprüche 1 bis 7, gekennzeichnet durch einen innerhalb des Gehäuses (21) gebildeten Kanal (9) als Führung für das Zugband (200).

9. Seilzuggerät nach einem der Ansprüche 1 bis 8, gekennzeichnet durch eine Umhüllung aus elastischem Material.

Fig. 1a

Fig. 1b

Fig. 1c

*Fig. 2a*

*Fig. 2b*

Fig. 3a

Fig. 3b

Fig. 3c

Fig. 4

_Fig. 5a_

_Fig 5b_

Fig.6

0 252 313

Fig. 7

Fig. 8

Fig. 9

Fig. 10

Fig. 11

Fig. 12

Fig. 13

Fig. 14a

Fig. 14b

Fig. 14c

Fig. 14d

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 914 888 (SICHERHEITS- UND BANKEINRICHTUNGEN OSTERTAG-WERKE) * Seite 11, Zeile 5 - Seite 13, Zeile 26; Figuren 1-4 * | 1-3,7, 8 | F 16 G 11/12 |
| | --- | | |
| X | EP-A-0 104 155 (INDUSTRI AB THULE) * Seite 2, Zeile 24 - Seite 4, Zeile 16; Figuren 1-3 * | 1-3,7 | |
| | --- | | |
| X | US-A-4 530 135 (HSIANG) * Spalte 2, Zeile 46 - Spalte 3, Zeile 38; Figuren 2-4 * | 1,2 | |
| | ----- | | |

|  |
|---|
| RECHERCHIERTE SACHGEBIETE (Int. Cl.4) |
| F 16 G B 66 D B 60 P |

Der vorliegende Recherchenbericht wurde für alle Patentansprüche erstellt.

| Recherchenort | Abschlußdatum der Recherche | Prüfer |
|---|---|---|
| DEN HAAG | 21-10-1987 | BARON C. |